# FASCICULE DE BREVET EUROPEEN

(11) **EP 2 615 996 B1**
(45) Date de publication et mention de la délivrance du brevet: **19.07.2017**
(21) Numéro de dépôt: 11755079.8
(22) Date de dépôt: 13.09.2011
(51) Int. Cl.: A61C 13/15, B06B 1/02, A61C 1/07, H05B 33/08

(54) **GÉNÉRATEUR CONVENANT POUR ALIMENTER UNE LAMPE À POLYMERISER DENTAIRE**
GENERATOR FÜR DEN BETRIEB EINER ZAHNMEDIZINISCHEN HÄRTUNGSLAMPE
GENERATOR SUITABLE FOR POWERING A DENTAL CURING LIGHT

(30) Priorité: 16.09.2010 EP 10177186
(43) Date de publication de la demande: 24.07.2013
(73) Titulaire: OZONE TECHNOLOGIES LTD, St. Julians STJ 3203 (MT)
(72) Inventeur: KLOPFENSTEIN, Denis, CH-1110 Morges (CH); BAOUR, Daniel, CH-1180 Rolle (CH); FOWLER, James, CH-1180 Rolle (CH)
(74) Mandataire: Giraud, Eric
(86) Numéro de dépôt international: PCT/EP2011/065869
(87) Numéro de publication internationale: WO 2012/035024

(56) Documents cités:
- EP-A1- 2 230 027
- FR-A1- 2 391 001
- US-A- 3 668 486

## Description

### DOMAINE DE L'INVENTION

La présente invention concerne un générateur pour l'alimentation d'un transducteur piézoélectrique et convenant également pour alimenter une LED de puissance d'une lampe à polymériser dentaire par l'intermédiaire d'un redresseur. Elle concerne en outre un dispositif comprenant le générateur susmentionné et une lampe à polymériser dentaire comportant un redresseur.

### ART ANTERIEUR

En dentisterie, on utilise couramment des composites photosensibles, notamment pour boucher des caries et autres trous dans les dents. Pour ce faire, un composite dentaire liquide ou pâteux est d'abord placé sur, ou dans, une dent, et le composite est ensuite irradié à l'aide d'une lampe de façon à ce qu'il polymérise et durcisse. A cette fin, des lampes à polymériser dentaires sont connues qui comportent des LED (ou diodes luminescentes) pour produire l'énergie lumineuse nécessaire à la polymérisation. Certains fabricants de LED proposent d'ailleurs des LED de puissance émettant une lumière de couleur dite « bleu dentaire », et dont le spectre se limite à une bande relativement étroite autour de la longueur d'onde de 460 nm. Un avantage de ces LED « bleues dentaires » est qu'elles produisent relativement peu de chaleur parasite et se prêtent donc à être introduite directement dans la bouche du patient.

Pour fonctionner, les LED d'une lampe à polymériser dentaire doivent être raccordées à une alimentation électrique fournissant typiquement une tension continue de l'ordre de 10 à 20 Volts et une puissance d'une quinzaine de Watts. Toutefois, on comprendra que ces valeurs ne sont données qu'à titre d'exemple, et que la tension d'alimentation, notamment, dépend entre autre du nombre de LED contenues dans la lampe, ainsi que de la manière dont ces LED sont interconnectées.

En dentisterie, on utilise également couramment des appareils de traitement dentaire à ultrasons. Ces appareils sont utilisés par les dentistes pour le détartrage ou plus généralement pour éliminer tout dépôt sur la surface des dents. Habituellement, les appareils dentaires à ultrason ont la forme d'une pièce à main sur laquelle est monté un insert ultrasonique qui constitue l'outil vibrant proprement dit. Un transducteur piézoélectrique est encore agencé dans la pièce à main de façon à produire une vibration ultrasonore et à communiquer cette vibration à l'insert.

Pour fonctionner, le transducteur piézoélectrique de l'appareil à ultrason doit être recordé à une alimentation électrique fournissant une tension alternative de fréquence ultrasonique et qui se monte à quelques centaines de volts. De façon connue, la pièce à main peut être reliée à l'alimentation électrique par un cordon flexible. De plus un connecteur peut être prévu à la jonction entre la pièce à main et le cordon, de manière à permettre de détacher la pièce à main, notamment pour la nettoyer ou la stériliser.

La société Mectron S.R.L. commercialise depuis peu un générateur électrique ultrasonique polyvalent pouvant être connecté à deux types de pièces à mains fonctionnant de manière complètement différente, d'une part des pièces à main servant d'appareils à ultrason, et d'autre part des pièces à main servant de lampes à polymériser dentaires. Un avantage de disposer d'un tel générateur électrique polyvalent et qu'il n'est plus nécessaire d'avoir deux alimentations électriques distinctes, l'une pour l'outil à ultrason et l'autre pour la lampe à polymériser.

L'utilisation d'un seul générateur polyvalent au lieu de deux entraîne certaines difficultés. En effet, l'appareil à ultrason à besoin pour fonctionner d'une tension alternative de quelques dizaines de kHz et quelques centaines de volts. En revanche, la lampe à polymériser dentaire n'a normalement besoin pour fonctionner que d'une tension continue de l'ordre de la dizaine de volts. Pour surmonter cette difficulté et permettre d'alimenter la lampe à polymériser avec un générateur prévu pour un appareil à ultrason, une solution possible est d'agencer dans la lampe un circuit pour abaisser la tension et pour convertir la tension alternative en tension continue.

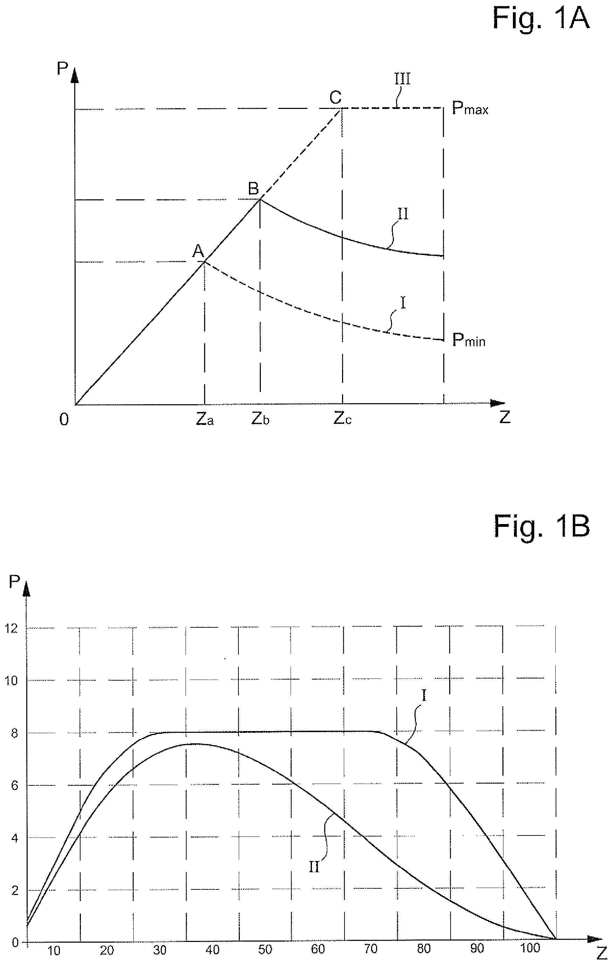

Cette solution s'accompagne elle-même de certaines difficultés. En effet, la plupart des générateurs pour transducteur piézoélectrique se comportent conformément à ce qui est décrit dans le document de brevet FR 2'391'001. La figure 1A annexée, tirée de ce document antérieur, est un diagramme montrant la puissance délivrée P en fonction de l'impédance Z du transducteur, respectivement dans le cas d'une puissance minimale (courbe I), d'une puissance intermédiaire (courbe II), et de la puissance maximale (courbe III). Si on considère la courbe II correspondant à la puissance intermédiaire, on voit que tant que l'impédance Z du transducteur demeure inférieure au seuil Zb, la puissance P délivrée au transducteur augmente proportionnellement à l'impédance. Si l'impédance dépasse le seuil de référence, le générateur de courant constant est bloqué et le générateur de tension débloqué. Dès cet instant, la puissance délivrée diminue selon une loi hyperbolique à mesure que l'impédance croît. On comprendra donc que les générateurs d'alimentation d'un transducteur piézoélectrique habituels ont l'inconvénient de ne fournir une puissance maximale que pour une valeur bien précise de l'impédance du transducteur (comme en témoigne la forme généralement triangulaire des courbes I et II de la figure 1 A). On comprendra donc qu'il ne suffit pas, pour alimenter une lampe à polymériser, d'abaisser la tension et de la redresser. Encore faut-il veiller à ce que l'impédance de la charge constituée par la lampe et le circuit pour abaisser la tension soit adaptée au générateur. Le document EP 2 230 027 A1 faisant partie de l'art antérieur selon l'Article 54 (3) CBE, divulgue un générateur pour l'alimentation d'un transducteur piézoélectrique utilisable en dentisterie. Un but de la présente invention est donc de fournir un générateur électrique ultrasonique apte à alimenter une lampe à polymériser dentaire avec lequel la puissance délivrée ne dépend pas sensiblement de l'impédance de la charge, et un autre but de la présente invention est de fournir un générateur électrique ultrasonique apte à alimenter une lampe à polymériser dentaire, qui ne nécessite pas d'intercaler un circuit pour abaisser la tension entre le générateur et la lampe.

### RESUME DE L'INVENTION

La présente invention atteint ce but en fournissant un générateur selon la revendication 1 annexée.

### BREVES DESCRIPTION DES FIGURES

D'autres caractéristiques et avantages de la présente invention apparaîtront à la lecture de la description qui va suivre, donnée uniquement à titre d'exemple non limitatif, et faite en référence aux dessins annexés dans lesquels :
- la figure 1A est un est un graphique montrant la puissance délivrée par un générateur de l'art antérieur pour transducteur piézoélectrique en fonction de l'impédance du transducteur piézoélectrique ;
- la figure 1B est un graphique permettant de comparer la puissance délivrée par un générateur selon la présente invention en fonction de l'impédance de la charge avec celle délivrée dans les mêmes circonstances par un générateur de l'art antérieur ;
- la figure 2 est un schéma électrique d'un mode de réalisation de l'invention ;
- les figures 3A, 3B et 3C sont des graphiques montrant le courant et la tension dans les enroulements des transformateurs du générateur de la figure 2 pour trois valeurs de l'impédance de la charge.

### DESCRIPTION DETAILLEE D'UN MODE DE REALISATION

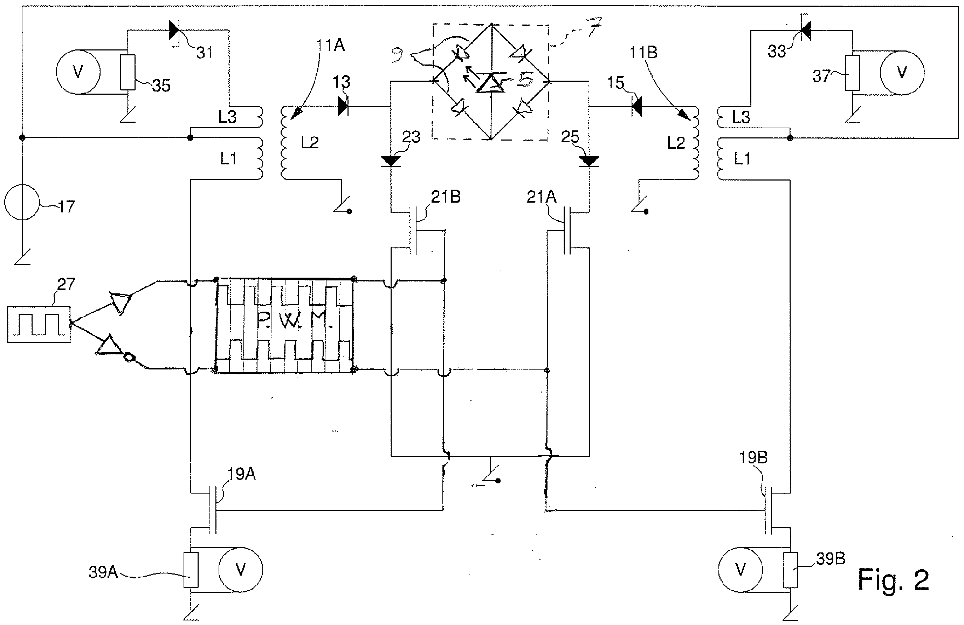

La figure 2 est un schéma électrique d'un générateur correspondant à un mode particulier de réalisation de l'invention et en sortie duquel est connecté la LED de puissance 5 d'une lampe à polymériser dentaire 7. La lampe 7 est également équipée d'un redresseur 9. Le générateur pour l'alimentation d'une lampe à polymériser dentaire 7 comporte deux transformateurs 11 A et 11 B comprenant chacun un enroulement primaire L1 et un enroulement secondaire L2. Chacun des deux enroulements secondaires L2 est relié par une de ses bornes à l'un des deux pôles de la lampe 7, une diode (13 ou 15) étant encore intercalée entre chaque enroulement secondaire et la lampe. L'autre borne de chacun des enroulements secondaires L2 est reliée à la masse.

Chacun des enroulements primaires L1 des transformateurs 11 A et 11 B est connecté, en série avec un interrupteur (19A ou 19B), entre les bornes d'une alimentation. Dans le présent exemple, l'alimentation est constituée par une source de tension référencée 17 et dont l'un des pôles est relié à chacun des enroulements primaires L1 et l'autre pôle à la masse. Les interrupteurs 19A et 19B, tout comme les autres interrupteurs mentionnés dans la présente description, sont des interrupteurs à commande électrique qui peuvent être implémentés sous forme de transistors. De tels interrupteurs seront désignés ci-après par leur nom anglais « switch ». En plus d'être reliés aux secondaires L2 des deux transformateurs, les deux pôles de la lampe 7 sont également reliés à la masse par l'intermédiaire d'une diode 23 et d'un switch 21 B, respectivement d'une diode 25 et d'un switch 21 A. Cela revient à dire, d'une part, que la lampe 7 est connectée, en série avec la diode 13, la diode 25 et le switch 21 A, entre les bornes du secondaire L2 du transformateur 11 A, et que, d'autre part, la lampe 7 est également connectée, en série avec la diode 15, la diode 23 et le switch 21 B, entre les bornes du secondaire L2 du transformateur 11 B.

Les switchs 19A 21 B sont prévus pour être commandés par un premier signal de commande périodique, qualifié ici de signal « direct », alors que les switchs 19B et 21 A sont prévu pour être commandé par un second signal de commande périodique qui est déphasé d'une demi période par rapport au premier signal périodique, et qui est qualifié ici de signal « inverse ». Dans le présent exemple, des moyens non représentés permettent de commander la durée des impulsions périodiques constituant le premier et le second signal de commande. Cette modulation de durée d'impulsion (ou modulation PWM, connue en soi) agit de préférence sur les deux signaux, de manière à ce que les impulsions périodiques des deux signaux de commande aient toutes la même durée.

A la lecture de la description qui va suivre, l'homme du métier comprendra que la puissance fournie par le générateur dépend de la durée des impulsions, et que les moyens de modulation PWM permettent donc de commander la puissance fournie par le générateur. Précisons toutefois que la présente invention ne se limite pas à un générateur dont la puissance est commandée par modulation PWM. En effet, selon un autre mode de réalisation, la puissance fournie par le générateur pourrait par exemple être fixée une fois pour toute. Alternativement, il est encore possible de commander la puissance fournie par le générateur en ajustant la tension fournie par l'alimentation 17, ou en faisant varier la fréquence du premier et du second signal de commande périodique. Concernant cette dernière possibilité, il est important de noter que, contrairement à un transducteur piézoélectrique, une lampe à polymériser dentaire ne constitue pas un circuit du type résonant, mais uniquement un circuit du type résistif (en d'autre termes, les caractéristiques de la lampe à polymériser connectée au générateur ne déterminent pas la fréquence à laquelle le générateur doit fonctionner).

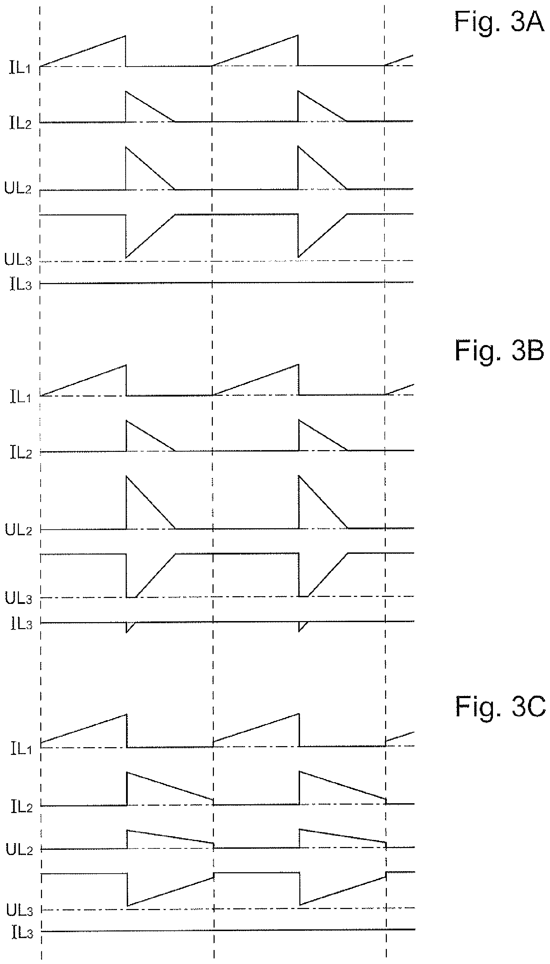

Pendant la durée des impulsions du signal « direct », les switchs 19A et 21 B sont fermés. Pendant la durée des impulsions du signal « inverse », ce sont les switch 19B et 21 A qui sont fermés. Pendant une impulsion du signal « inverse », le circuit formé par le secondaire L2 du transformateur 11 A, la lampe 7, les diodes 13 et 25 et le switch 21 A est fermé et l'énergie stockée dans le transformateur 11 A se transfère à la charge. Simultanément, le switch 19B est fermé et le primaire L1 du transformateur 11 B est relié directement à la source de tension 17. Le courant à travers le primaire produit une augmentation du flux magnétique. De l'énergie est ainsi stockée dans le circuit magnétique. Pendant une impulsion du signal « direct », c'est l'inverse. Le secondaire L2 du transformateur 11 B restitue sont énergie en se déchargeant dans le circuit comprenant la lampe 7, les diodes 15 et 23 et le switch 21 B, alors que le courant à travers le primaire L1 du transformateur 11 A induit le stockage d'énergie dans son circuit magnétique. Le graphique de la figure 3A montre le comportement du courant et de la tension dans les enroulements L1, L2 et L3 d'un des deux transformateurs 11 A ou 11 B dans un cas exemplaire où la durée d'une impulsion est exactement égale à une demi-période. On voit que le courant IL1 dans le primaire de transformateur croît régulièrement pendant une alternance avant de retomber à zéro et d'y rester pour la durée de l'alternance suivante. A la transition entre deux alternances, l'enroulement secondaire prend le relais. On voit qu'un courant IL2, dont l'intensité va en diminuant, circule dans le secondaire. Dans l'exemple illustré, le courant IL2 circule jusqu'à dissipation complète de l'énergie stockée. Les variations de la tension UL2 entre les bornes de l'enroulement secondaire accompagnent celles de l'intensité de IL2.

On comprendra que le fait d'avoir deux transformateurs 11 A et 11 B et de connecter la lampe 7 alternativement à l'un puis à l'autre de ces derniers, conduit à fournir à la lampe une tension d'alimentation alternative. D'autre part, l'homme du métier appréciera, qu'en résumé, la fonction des switchs 19A, 19B, 21 A, 21 B est de commander les transformateurs 11 A et 11 B pour les faire fonctionner sur le mode communément appelé « flyback ».

II peut arriver que l'impédance de la charge soit insuffisante pour dissiper intégralement l'énergie stockée dans le transformateur. Cette situation est illustrée par le graphique de la figure 3C. En se référant à ce graphique, on peut voir que, lorsque l'impédance de la charge est particulièrement basse, le courant IL2 et la tension UL2 n'ont pas le temps de retomber à zéro avant la fin d'une alternance. On peut voire également que l'énergie non dissipée dans le secondaire se retrouve dans le primaire au début de l'alternance suivante. Cette énergie non dissipée est responsable de l'intensité non nulle du courant IL1 dans l'enroulement primaire L1 en début d'alternance (Figure 3C). On comprendra donc qu'en dessous d'un certain seuil, plus l'impédance est petite, plus l'intensité du courant IL1 dans le primaire est grande.

La figure 2 montre encore deux circuits de mesures 39A et 39B. Ces circuits de mesure sont agencés chacun pour mesurer le courant dans le primaire (L1) de l'un des deux transformateurs 11 A et 11 B. De manière générale, le courant mesuré par les circuits de mesure est fonction de l'impédance de la charge connectée au générateur. Cette mesure peut donc servir pour la régulation du générateur. En particulier, une éventuelle forme trapézoïdale du courant (IL1, figure 3C) est le signe qu'une partie de l'énergie n'a pas pu être dissipée et subsiste dans le transformateur depuis l'alternance précédente. De plus, la mesure du courant permet de détecter, par example, d'éventuels courts-circuits, de détecter une fréquence de résonnance, ou encore de déterminer automatiquement le type de charge connectée au générateur (circuit résonant ou circuit résistif).

On peut voire encore sur la figure 2 que les transformateur 11 A et 11 B comportent encore chacun un enroulement tertiaire L3. L'enroulement L3 du transformateur 11 A est connecté, en série avec une diode 31 et une résistance 35, entre la source de tension 17 et la masse. De façon analogue, l'enroulement L3 du transformateur 11 B est connecté, en série avec diode 33 et une résistance 37, entre la source de tension 17 et la masse. Comme on va le voir plus en détail ci-après, la fonction des enroulements L3 est de limiter la tension maximale fournie en sortie du secondaire L2.

La vitesse avec laquelle l'intensité du courant dans L2 diminue lorsque l'énergie stockée dans un des transformateurs est transférée à la charge dépend naturellement de l'impédance associée à la charge. Plus cette impédance est élevée, plus l'intensité du courant décroît rapidement, et plus la tension entre les bornes de l'enroulement secondaire est élevée. Le graphique de la figure 3B décrit le comportement du générateur de la figure 2 dans une situation où l'impédance de la charge connectée au générateur est particulièrement élevée. On peut voir sur la figure 3B que l'intensité du courant IL2 décroît sensiblement plus rapidement que dans la figure 3A. De plus, la tension UL2 au début d'une alternance est également considérablement plus élevée que dans le cas de la figure 3A. On comprendra que si, pour une raison ou une autre, l'impédance de la lampe 7 devient très grande (en raison d'un composant grillé dans le circuit, par exemple), la tension en sortie de UL2 risque de s'accroître au point d'endommager le générateur. C'est la raison pour laquelle, dans le présent exemple, les deux transformateurs 11 A et 11B comportent chacun un troisième enroulement L3 qui est couplé inductivement avec les enroulements primaire et secondaire L1 et L2.

En se référant à nouveau à la figure 2, on voit que les diodes 31 et 33 sont connectées aux enroulements L3 par leur cathode, et elles sont connectées à la masse par leur anode. Comme l'autre borne de chaque enroulement L3 est connectée au pôle positif de la source de tension 17, les diodes sont normalement soumises à une tension UL3 négative. Dans ces conditions, les diodes 31 et 33 empêchent le passage du courant. Toutefois, si la tension induite dans L3 dépasse la tension d'alimentation continue, la tension UL3 résultante sur les diodes devient transitoirement positive, et un courant IL3 se met à circuler dans L3. Ce courant IL3 transitoire a pour effet de limiter la tension UL2 aux bornes de l'enroulement L2. La présence de l'enroulement L3 permet donc de plafonner la tension UL2 à une valeur qui est déterminée par le choix du rapport entre les valeurs des inductions L2 et L3.

La figure 1B est un graphique comportant une première courbe qui montre le comportement de la puissance fournie par le générateur qui vient d'être décrit en fonction de l'impédance du transducteur piézoélectrique. Le graphique comporte également une deuxième courbe qui correspond au comportement de la puissance d'un générateur de l'art antérieur pour transducteur piézoélectrique comme celui décrit dans le document de brevet FR 2'391'001 déjà mentionné. On voit sur la figure 1B que la première courbe comporte une première portion croissante, un deuxième portion constante et enfin une troisième portion décroissante. La deuxième portion occupe toute la partie centrale du graphique et correspond donc à des valeurs moyennes de l'impédance. Dans cet intervalle, la puissance fournie par le générateur selon l'invention est sensiblement constante, et le comportement du générateur correspond à ce qui est décrit par le graphique de la figure 3A. La première portion de la courbe correspond à des valeurs de l'impédances qui ne sont pas suffisante entièrement dissiper l'énergie stockée dans les transformateurs avant la fin d'une alternance. Cette première portion de la courbe correspond à un intervalle dans lequel le comportement du générateur correspond à ce qui est décrit par le graphique de la figure 3C. Dans cet intervalle, la puissance fournie se réduit en proportion de l'impédance. La troisième portion de la courbe correspond aux impédances les plus élevées. Le comportement du générateur dans cette zone correspond à ce qui est décrit par le graphique de la figure 3B. Dans cette zone, la tension entre les bornes du secondaire L2 est limitée par l'enroulement L3 et le courant décroît donc à mesure que l'impédance croît.

La première courbe de la figure 1B permet donc de comprendre que la puissance fournie en sortie par un générateur selon l'invention est sensiblement constante pour un large éventail de valeur de l'impédance de la charge. Lorsque le générateur alimente un transducteur piézoélectrique, cette caractéristique l'invention permet de fournir au transducteur une puissance constante indépendamment des fluctuations de la charge mécanique à laquelle le transducteur piézoélectrique est soumis. De plus, lorsqu'une LED d'une lampe à polymériser dentaire (dont l'impédance est beaucoup plus petite) est substituée au piézoélectrique, La puissance fournie par le générateur n'en est pas affectée.

## Revendications

1. Dispositif électronique pour dentiste **caractérisé en ce qu'**il comprend un générateur pour l'alimentation d'un transducteur piézoélectrique et convenant également pour alimenter une LED de puissance d'une lampe à polymériser dentaire, le générateur comportant deux transformateurs (11 A, 11B) comprenant chacun un enroulement primaire (L1) et un enroulement secondaire (L2), et quatre switchs (19A, 19B, 21A, 21 B) commandés par un oscillateur de fréquence ultrasonore, deux switchs (21A, 21 B) étant prévus pour relier en alternance les secondaires des deux transformateurs à la charge piézoélectrique (5), et les deux autres switchs (19A, 19B) étant prévus pour connecter alternativement les deux enroulements primaires à une alimentation en tension (17) de manière à ce que pendant une première alternance, dite alternance positive, l'enroulement primaire d'un des transformateur se charge en énergie alors que l'enroulement secondaire de l'autre transformateur se décharge dans la charge piézoélectrique (5), et à ce que pendant une seconde alternance, dite alternance négative, l'enroulement secondaire du premier transformateur décharge son énergie alors que l'enroulement primaire du premier transformateur est chargé, le générateur étant relié à au moins une LED de puissance (5) par l'intermédiaire d'un redresseur (9).

2. Dispositif élctronique selon la revendication 1, **caractérisé en ce qu'**il comprend des moyens pour commander la puissance fournie par le générateur.

3. Dispositif électronique selon la revendication 2, **caractérisée en ce que** les moyens pour commander la puissance utilisent la modulation de durée d'impulsion (PWM)

4. Dispositif électronique selon la revendication 2, **caractérisé en ce que** les moyens pour commander la puissance module la tension fournie par ladite alimentation en tension (17) et/ou la fréquence du premier et du second signal de commande périodique.

5. Dispositif électronique selon l'une des revendications précédentes, dans lequel chaque transformateur (11A, 11B) du générateur comprend un troisième enroulement (L3) maintenu à une tension fixe et une diode (31, 33) en série avec le troisième enroulement de manière à limiter la tension négative entre les bornes du troisième enroulement (L3).

6. Dispositif électronique selon l'une des revendications précédentes, dans lequel au moins un des transformateurs (11A, 11B) du générateur comporte un circuit de mesure (39A, 39B) du courant dans l'enroulement primaire (L1) prévu pour détecter une éventuelle forme trapézoïdale du courant qui serait la manifestation de la présence d'énergie non dissipée subsistant depuis l'alternance précédente.

7. Dispositif électronique selon l'une des revendications précédentes, dans lequel au moins un des transformateurs (11A, 11B) du générateur comporte un circuit de mesure (35, 37) du courant dans le troisième enroulement (L3), prévu pour détecter si le troisième enroulement laisse passer un courant, et donc de détecter si la tension négative entre les bornes du troisième enroulement a été limitée.

## Patentansprüche

1. Zahnärztliche elektronische Vorrichtung, **dadurch gekennzeichnet, dass** sie einen Generator für die Versorgung eines piezoelektrischen Wandlers umfasst, der ferner geeignet ist, eine Leistungs-LED einer Lampe für zahntechnische Polymerisation zu versorgen, wobei der Generator zwei Transformatoren (11A, 11 B) umfasst, wovon jeder eine Primärwicklung (L1) und eine Sekundärwicklung (L2) sowie vier Schalter (19A, 19B, 21A, 21B) umfasst, die durch einen Ultraschallfrequenz-Oszillator gesteuert werden, wobei zwei Schalter (21A, 21B) vorgesehen sind, um abwechselnd die Sekundärwicklungen der beiden Transformatoren mit der piezoelektrischen Last (5) zu verbinden, und die zwei anderen Schalter (19A, 19B) vorgesehen sind, abwechselnd die beiden Primärwicklungen mit einer Spannungsversorgung (17) zu verbinden, derart, dass während einer ersten Halbschwingung, genannt positive Halbschwingung, die Primärwicklung eines der Transformatoren mit Energie versorgt wird, während die Sekundärwicklung des anderen Transformators in die piezoelektrische Last (5) entladen wird, und dass während einer zweiten Halbschwingung, genannt negative Halbschwingung, die Sekundärwicklung des ersten Transformators ihre Energie abgibt, während die Primärwicklung des ersten Transformators geladen wird, wobei der Generator über einen Gleichrichter (9) mit mindestens einer Leistungs-LED (5) verbunden ist.

2. Elektronische Vorrichtung nach Anspruch 1, **dadurch gekennzeichnet, dass** sie Mittel umfasst, um die von dem Generator gelieferte Leistung zu steuern.

3. Elektronische Vorrichtung nach Anspruch 2, **dadurch gekennzeichnet, dass** die Mittel zum Steuern der Leistung die Pulsbreitenmodulation (PWM) verwenden.

4. Elektronische Vorrichtung nach Anspruch 2, **dadurch gekennzeichnet, dass** die Mittel zum Steuern der Leistung die von der Spannungsversorgung (17) gelieferte Spannung und/oder die Frequenz des ersten und des zweiten periodischen Steuersignals modulieren.

5. Elektronische Vorrichtung nach einem der vorhergehenden Ansprüche, wobei jeder Transformator (11A, 11 B) des Generators eine dritte Wicklung (L3), die auf einer festen Spannung gehalten wird, und eine Diode (31, 33) in Reihe mit der dritten Wicklung umfasst, derart, dass die negative Spannung zwischen den Anschlüssen der dritten Wicklung (L3) begrenzt wird.

6. Elektronische Vorrichtung nach einem der vorhergehenden Ansprüche, wobei mindestens einer der Transformatoren (11A, 11B) des Generators eine Messschaltung (39A, 39B) für den Strom in der Primärwicklung (L1) umfasst, die vorgesehen ist, um eine eventuelle Trapezform des Stroms zu detektieren, was ein Hinweis auf das Vorhandensein nicht abgeführter Energie, die seit der vorhergehenden Halbschwingung vorhanden ist, wäre.

7. Elektronische Vorrichtung nach einem der vorhergehenden Ansprüche, wobei wenigstens einer der Transformatoren (11A, 11 B) des Generators eine Messschaltung (35, 37) für den Strom in der dritten Wicklung (L3) umfasst, die vorgesehen ist, um zu detektieren, ob die dritte Wicklung einen Strom durchlässt, und somit zu detektieren, ob die negative Spannung zwischen den Anschlüssen der dritten Wicklung begrenzt worden ist.

## Claims

1. Electronic device for a dentist, **characterized in that** it comprises a generator for powering a piezoelectric transducer and also suitable for powering a high power LED for a dental polymerisation lamp, the generator comprising two transformers (11A, 11 B) each including a primary winding (L1) and a secondary winding (L2) and four switches (19A, 19B, 21A, 21 B) controlled by an ultrasonic reference oscillator, two switches (21A, 21B) being arranged to alternately connect the secondary windings of the two transformers to the piezoelectric load (5), and the other two switches (19A, 19B) being arranged to alternately connect the two primary windings to a voltage supply (17) so that during a first alternation, called the "positive" alternation, the primary winding of one of the transformers is charged with energy whereas the secondary winding of the other transformer is discharged into the piezoelectric load (5), and so that during a second alternation, called the "negative" alternation, the secondary winding of the first transformer discharges the energy thereof whereas the primary winding of the first transformer is charged, the generator being connected to at least one high power LED via a rectifier (9).

2. Electronic device according to claim 1, **characterized in that** it includes a means of controlling the power supplied by the generator.

3. Electronic device according to claim 2, **characterized in that** the means of controlling the power uses pulse width modulation (PWM).

4. Electronic device according to claim 2, **characterized in that** the means of controlling the power modulates the voltage supplied by said voltage supply (17) and/or the frequency of the first and second periodic control signals.

5. Electronic device according to any of the preceding claims, wherein each transformer (11A, 11B) of the generator includes a third winding (L3) maintained at a fixed voltage and a diode (31, 33) in series with the third winding so as to limit the negative voltage between the terminals of the third winding (L3).

6. Electronic device according to any of the preceding claims, wherein at least one of the transformers (11 A, 11B) of the generator includes a circuit (39A, 39B) for measuring the current in the primary winding (L1) arranged to detect any trapezoidal shape of the current which would be a manifestation of the presence of non-dissipated energy remaining from the preceding alternation.

7. Electronic device according to any of the preceding claims, wherein at least one of the transformers (11 A, 11B) of the generator includes a circuit (35, 37) for measuring the current in the third winding (L3), arranged to detect whether the third winding is allowing a current to pass, and thus to detect whether the negative voltage between the terminals of the third winding has been limited.
